# EUROPÄISCHE PATENTANMELDUNG

(11) **EP 0 786 851 A1**
(43) Veröffentlichungstag der Anmeldung: **30.07.1997**
(21) Anmeldenummer: 97100627.5
(22) Anmeldetag: 16.01.1997
(51) Int. Cl.: H02K 1/27, H02K 21/16, H02K 21/18

(54) **Haushaltsgerät-Pumpenantrieb mit einem selbstanlaufenden Einphasen-Synchronmotor**

(30) Priorität: 29.01.1996 DE 29601491 U
(71) Anmelder: SIEMENS AKTIENGESELLSCHAFT, 80333 München (DE)
(72) Erfinder: Altenbernd, Gerald, Dr., 30455 Hannover (DE); Wähner, Ludwig, Dipl.-Ing., 97234 Reichenberg (DE)

(57) **Zusammenfassung**

Zur Minderung des Betriebsgeräusches eines Haushaltsgerät-Pumpenantriebes mit einem selbstanlaufenden Einphasen-Synchronmotor mit permanentmagnetisch erregtem Rotor ist ein gegenseitig nichtachsparalleler Verlauf der Polteilung des Stators (1,2,6;3,4,7) einerseits gegenüber der Polteilung des Rotors (8) andererseits vorgesehen.

## Beschreibung

Die Erfindung bezieht sich auf einen Haushaltsgerät-Pumpenantrieb mit einem selbstanlaufenden Einphasen-Synchronmotor gemäß Oberbegriff des Anspruchs 1; selbstanlaufende Einphasen-Synchronmotore der vorgenannten Art sind aus der EP-B1-0 358 805 bzw. der EP-B1-0 358 806 bekannt.

Einphasen-Synchronmotoren müssen für einen selbständigen Anlauf und Hochlauf zumindest zwei Bedingungen erfüllen. Der Motor muß zum einen beim Einschalten zunächst überhaupt in Bewegung kommen und zum anderen anschließend im weiteren Verlauf der Bewegung innerhalb einer bestimmten Zeit in eine Drehrichtung so stark beschleunigt werden, daß er die synchrone Geschwindigkeit erreichen und dem Statorfeld folgen kann.

Die erste Bedingung für einen selbständigen Anlauf kann dadurch erreicht werden, daß einem Einzelpol eine unsymmetrische Form derart gegeben wird, daß der Luftspalt, z.B. in Form eines Stufenpols, an gegenüberliegenden Stellen eines Polpaares im Vergleich zum übrigen Luftspaltverlauf erweitert bzw. verengt ist. Gemäß den beiden vorgenannten Europäischen Patenten kann in fertigungstechnisch einfacher und trotzdem betriebssicherer Weise eine darüber hinaus verstärkte Anlaufhilfe dadurch erreicht werden, daß zumindest ein Pol eines Polpaares aufgrund zumindest einer im Statorblechpaket vorgesehenen magnetischen Engstelle einen Polbogenteil erhöhter lokaler Statorerregung mit entsprechend gegenüber der Rotorfeldachse verdrehter Statorfeldachse aufweist.

Gemäß Aufgabe vorliegender Erfindung sollen Haushaltsgerät-Pumpenantriebe mit einem selbstanlaufenden Einphasen-Synchronmotor mit permanentmagnetisch erregtem Rotor durch Verminderung des Betriebsgeräusches weiter verbessert werden.

Die Lösung dieser Aufgabe gelingt bei einem Haushaltsgerät-Pumpenantrieb der eingangs genannten Art durch die Lehre des Anspruchs 1; vorteilhafte Ausgestaltungen der Erfindung sind jeweils Gegenstand der Unteransprüche.

Durch die erfindungsgemäße Maßnahme kann z.B. durch einfache spezifische Ausrichtung der Polteilung und damit der axialen Polachsen beim Aufmagnetisieren des Rotors in einer Magnetisierungsvorrichtung erreicht werden, daß die axiale Polausrichtung im Rotor über dessen axiale Länge schräg zu der in fertigungstechnisch vorteilhafter Weise achsparallelen Polausrichtung im Stator verläuft; dadurch können bei Drehung des Rotors "magnetisch harte Kanten" zwischen den Polen des Rotors einerseits und den Polen des Stators, insbesondere den Polkanten im Bereich der Luftspaltweitenänderungen, andererseits vermieden und dadurch bedingte Geräusche unterdrückt werden.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: den radialen Querschnitt durch einen Einphasen-Synchronmotor mit symmetrischem Blechschnitt des Statorblechpaketes;
- FIG 2: den radialen Querschnitt durch einen Einphasen-Synchronmotor mit unsymmetrischem Blechschnitt des Statorblechpaketes;
- FIG 3: einen permanentmagnetisch erregten Rotor mit achsparalleler Polteilung;
- FIG 4: einen permanentmagnetisch erregten Motor mit nichtachsparalleler, über die gesamte axiale Länge geradliniger Polteilung;
- FIG 5: einen permanentmagnetisch erregten Rotor mit nichtachsparalleler, zick-zack-verlaufender Polteilung.

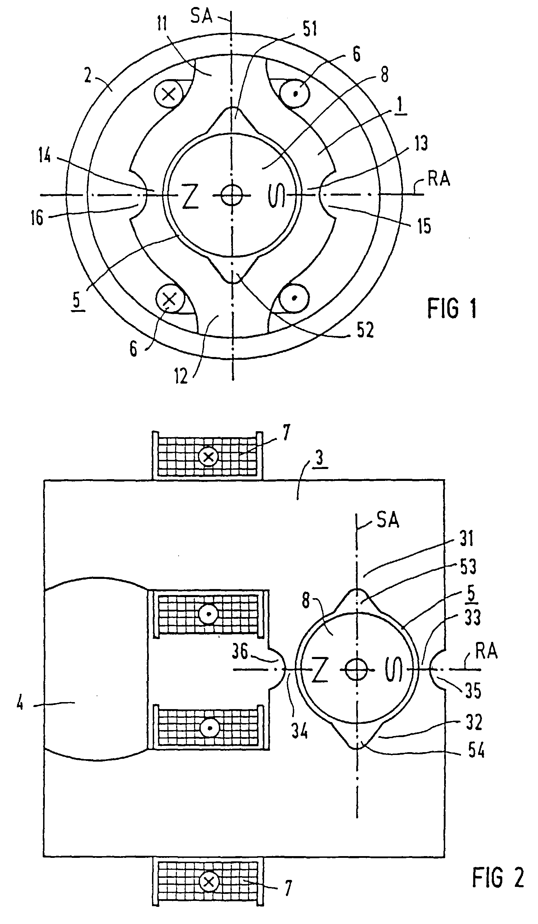

FIG 1 zeigt in einem radialen Querschnitt einen zweipoligen Einphasen-Synchronmotor mit symmetrischem Blechschnitt des Statorblechpaketes 1,2 und massivem, in einer Magnetisierungsvorrichtung mit einem Nordpol N und einem Südpol S magnetisiertem zweipoligem permanenterregtem Rotor 8. Das Statorblechpaket 1,2 setzt sich zusammen aus einem Pol-Blechpaketteil 1 mit einem ersten Einzelpol 11 und einem zweiten Einzelpol 12, deren Polspitzen an den freien Enden der Polhörner im Sinne eines geschlossenen Blechschnittes miteinander verbunden sind, und einem ringförmigen Rückschlußjoch-Blechpaketteils 2, das über die radial freien Enden der zuvor mit aufgesteckten Statorwicklungsspulen 6,6 versehenen Polhörnern der Pole 11,12 im Preßsitz überstülpbar ist.

Zur Verbesserung der Anlauf- bzw. Hochlaufeigenschaften weist das Pol-Blechpaketteil 1 in Richtung der durch die Erregung der Statorwicklungsspulen 6,6 gegebenen Statorfeldachse SA Luftspaltaufweitungen 51,52 des Luftspaltes 5 und in Richtung der zur Statorfeldachse SA um 90° el verschobenen Rotorfeldachse RA in Rotorruhestellung magnetische Blechpaketengstellen 13,14 auf. Die magnetischen Blechpaketengstellen 13,14 werden ebenso wie die Luftspaltaufweitungen 51,52 durch außenrandseitige bzw. luftspaltseitige Ausstanzungen des Pol-Blechpaketteils 1 erreicht; die außenrandseitigen Ausstanzungen des Pol-Blechpaketteils 1 zur Erzielung der gewünschten Engstellen 13,14 tragen die Bezugszeichen 15,16.

FIG 2 zeigt einen Einphasen-Synchronmotor mit unsymmetrischem Blechschnitt des Statorblechpaketes 3,4. Das Statorblechpaket 3,4 besteht dazu aus einem U-förmigen Pol-Blechpaketteil 3 und einem zwischen die freien Enden der Schenkel des Pol-Blechpaketteils 3 nach dem Überstecken von Statorwicklungsspulen 7,7 über die Seitenschenkel des Pol-Blechpaketteils 3 im Preßsitz eindrückbaren Rückschlußjoch-Blechpaketteils 4. In ähnlicher Weise wie in FIG 1 sind auch beim Ausführungsbeispiel gemäß FIG 2 in Richtung der durch als Erregung der Statorwicklungsspulen 7,7 im Grundschenkel des U-förmigen Pol-Blechpaketteils 3 gegebenen Statorfeldachse SA Luftspaltaufweitungen 53,54 und in der dazu senkrecht liegenden Rotorfeldachse RA in Rotorruhestellung Blechpaketengstellen 33,34 durch außenrandseitige Ausstanzungen 35,36 im Pol-Blechpaketteil 3 vorgesehen.

In FIG 1,2 weisen sowohl der angedeutete permanentmagnetisch erregte Rotor 8 als auch der Stator (1,2,6;3,4,7) jeweils einen Nordpol N und einen Südpol S auf, die mit einer achsparallelen Polteilung derart versehen sind, daß die Begrenzungen der beiden Pole und die Polspitzen bzw. die Magnetisierungskonfigurationen jedes Pols gleichbleibend parallel zur Rotorachse verlaufen.

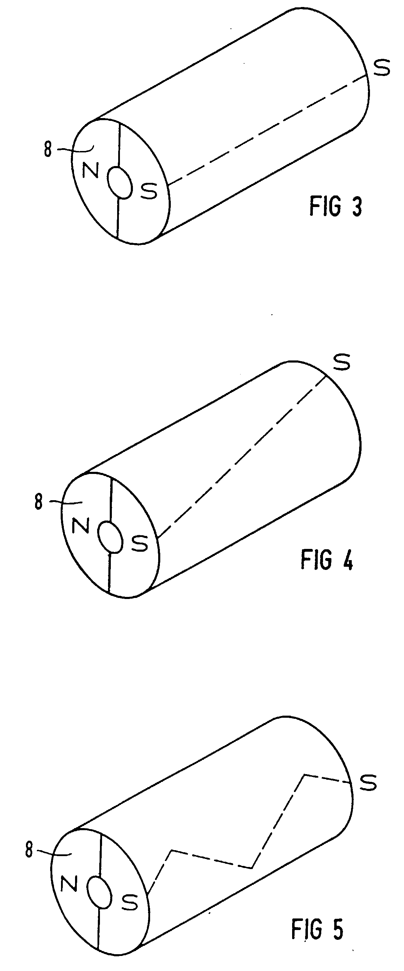

Ausgehend von einer achsparallel ausgerichteten zweipoligen Polteilung im Stator gemäß FIG 1 und 2 zeigt FIG 3 in Einzeldarstellung nochmals die bisher übliche bekannte ebenfalls achsparallele Ausrichtung einer zweipoligen Polteilung N;S im permanentmagnetisch erregten Rotor 8; zur Verdeutlichung ist die entsprechende Ausrichtung der Polmitten durch einen gestrichelten Linienverlauf angedeutet. Bei einer Drehung des Rotors 8 können somit "magnetisch harte Kanten" zwischen den Polen N;S im Rotor 8 einerseits und den gleichfalls achsparallel ausgerichteten Polen im Stator andererseits zu unerwünschten Betriebsgeräuschen führen.

FIG 5,4 zeigen zwei Ausführungsbeispiele, bei denen ausgehend von einer weiterhin achsparallel ausgerichteten Magnetisierung der Pole N;S im Stator die Pole N;S im Rotor 8 in Längsrichtung in schrägem Winkel zu der achsparallelen statorseitigen Ausrichtung magnetisiert sind, derart daß nunmehr das Aufeinandertreffen von "magnetisch harten Kanten" vermieden ist.

FIG 4 zeigt eine über die gesamte axiale Länge des Rotors 8 geradlinig verlaufende nichtachsparallele schräge Polausrichtung; durch eine derartige Polausrichtung besteht die Gefahr eines unerwünschten axialen Zuges auf den Rotor relativ zum Stator. Um dieser axial einseitigen Zugrichtung entgegenzuwirken, sind in vorteilhafter Weise gemäß FIG 5 die Pole N;S entlang einer Zick-Zack-Linie derart ausgerichtet, daß sich die axialen Züge in der einen bzw. in der anderen Achsrichtung ausgleichen und somit der Rotor 8 trotz nichtvorhandener magnetisch harter Kanten von unerwünschten axialen Zügen freigehalten werden kann.

Auch in FIG 4,5 soll der gestrichelte Linienverlauf die jeweilige Lage der Polmitten über die axiale Länge des Rotors andeuten.

Wie in FIG 3-5 durch eine durchgezogene stirnseitige Linie angedeutet, ist der - z.B. in einer Magnetisierungsvorrichtung - zu magnetisierende Rotorkörper in fertigungstechnisch vorteilhafter Weise in zwei im radialen Querschnitt halbkreisförmige Segmente aufgeteilt, von denen eines als Nordpol N und das andere als Südpol S eines zweipoligen permanentmagnetisch erregten Rotors ausgebildet ist.

## Patentansprüche

1. Haushaltsgerät-Pumpenantrieb mit einem selbstanlaufenden Einphasen-Synchronmotor mit einem zumindest zweipoligen, permanentmagnetisch erregten Rotor (8) und einem zumindest zwei Pole (11;12) aufweisenden Statorblechpaket (1;2;3;4) sowie mit einer über den Bohrungsumfang veränderlichen, insbesondere gestuften, Luftspaltweite, **gekennzeichnet durch** einen nichtparallelen Verlauf der Statorpolteilung relativ zur Rotorpolteilung.

2. Haushaltsgerät-Pumpenantrieb nach Anspruch 1, **gekennzeichnet durch** einen achsparallelen Verlauf der Statorpolteilung und einen nichtachsparallelen Verlauf der Rotorpolteilung.

3. Haushaltsgerät-Pumpenantrieb nach Anspruch 1 und/oder 2, **gekennzeichnet durch** einen über die gesamte Rotorlänge durchgehenden geradlinigen Verlauf der Rotorpolteilung.

4. Haushaltsgerät-Pumpenantrieb nach Anspruch 1 und/oder 2, **gekennzeichnet durch** einen, insbesondere nach Art einer Zick-Zack-Linie, über die gesamte Rotorlänge richtungswechselnden Verlauf der Rotorpolteilung.

5. Haushaltsgerät-Pumpenantrieb nach Anspruch 4, **gekennzeichnet durch** einen axialzugfreien Verlauf der Rotorpolteilung.

6. Selbstlaufender Einphasen-Synchronmotor nach zumindest einem der vorhergehenden Ansprüche 1-5, **gekennzeichnet durch** einen symmetrischen Blechschnitt des Statorblechpaketes (1;2). (FIG 1)

7. Haushaltsgerät-Pumpenantrieb nach zumindest einem der vorhergehenden Ansprüche 1-5, **gekennzeichnet durch** einen unsymmetrischen Blechschnitt des Statorblechpaketes (3;4). (FIG 2)

8. Haushaltsgerät-Pumpenantrieb nach zumindest einem der vorhergehenden Ansprüche 1-7, **gekennzeichnet durch** einen segmentartigen Aufbau des Rotors (8) mit zumindest je einem Segment je Pol (N bzw.S).

9. Haushaltsgerät-Pumpenantrieb nach Anspruch 8, **gekennzeichnet durch** einen zweipoligen Rotor (8) mit je einem halbkreisförmigen einstückigen magnetisierten Segment je Pol (N bzw.S).

10. Haushaltsgerät-Pumpenantrieb nach zumindest einem der Ansprüche 1-9, **gekennzeichnet durch** eine Verwendung für eine Laugenpumpe eines Waschautomaten oder eines Geschirrspülers.
